# EUROPEAN PATENT APPLICATION

(11) **EP 2 703 930 A1**
(43) Date of publication of application: **05.03.2014**
(21) Application number: 13178327.6
(22) Date of filing: 29.07.2013
(51) Int. Cl.: G05D 21/02, B01F 5/00

(54) **Apparatus for preparing glazes for the ceramic industry**

(30) Priority: 04.09.2012 IT MO20120207
(71) Applicant: Euromeccanica S.r.l., 41053 Maranello (MO) (IT)
(72) Inventor: Sichi, Marco, 41028 SERRAMAZZONI, MODENA (IT)
(74) Representative: Casadei, Giovanni

(57) **Abstract**

An apparatus for preparing glazes comprises a tank (1) suitable for containing a quantity of glaze, an (external) pump suitable for delivering a glaze to said tank (1), a first pump (8) suitable for dispensing said glaze from said tank (1), a densimeter (7) suitable for continuously measuring the density of the glaze contained in the tank (1), a plurality of pumps (9-12) connected to said tank (1) suitable for delivering thereto additive substances of said glaze that are contained in containers connected to said pumps (9-12).

## Description

The present invention concerns an apparatus for preparing glazes, in particular for the ceramic industry.

In the state of the art, glazes intended to be applied to a ceramic product are prepared by mixing the glaze in powder form with water in a drum mill and adding pigments.

The prepared glaze is placed in a large-capacity storage tank, for example of the order of several thousand litres, from which a quantity of glaze necessary for a production batch is subsequently drawn off and placed in a container with a capacity, for example, of about 1000-1500 litres. The glaze is then decanted from the container into the reservoir of the glazing machine, which has a capacity, for example, of about 100-150 litres. Further water is added to the glaze poured into the reservoir of the glazing machine to adjust the density of the glaze, together with additives to improve the way the glaze spreads and its drying speed.

The addition of further water and additives is performed manually by an operator in accordance with preset quantities. The operator must furthermore check with a manual densimeter that the density of the glaze corresponds to the desired quantity.

Since the reservoir of the glazing machine has a small capacity, the glaze is used up rapidly and fresh glaze must be frequently reintroduced into the reservoir. This requires that there should be an operator assigned full-time to the glazing machine.

The object of the present invention is to provide an apparatus which makes it possible to automatically prepare and check a ceramic glaze destined for supplying a glazing machine, without the need for the intervention of an operator, except for putting the apparatus into operation. The object of the invention is achieved with an apparatus according to claim 1.

Thanks to the invention it is possible to automatically prepare and check a ceramic glaze destined for supplying a glazing machine, eliminating the need for the presence of an operator assigned full-time to the glazing machine to check and adjust the rheological parameters of the glaze.

The invention will now be described with reference to the annexed drawings in which:

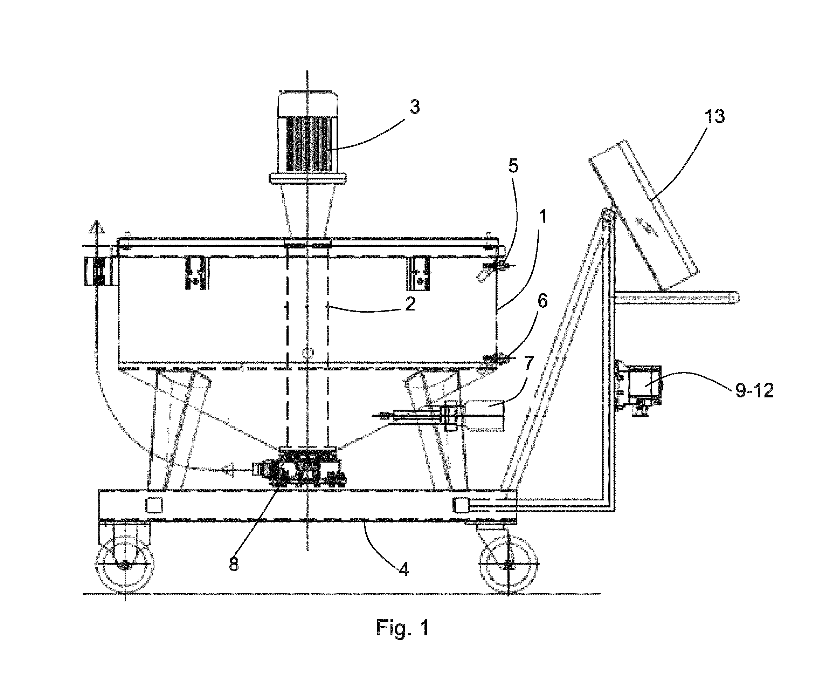

Figure 1 is a schematic view in elevation of an apparatus according to the invention;

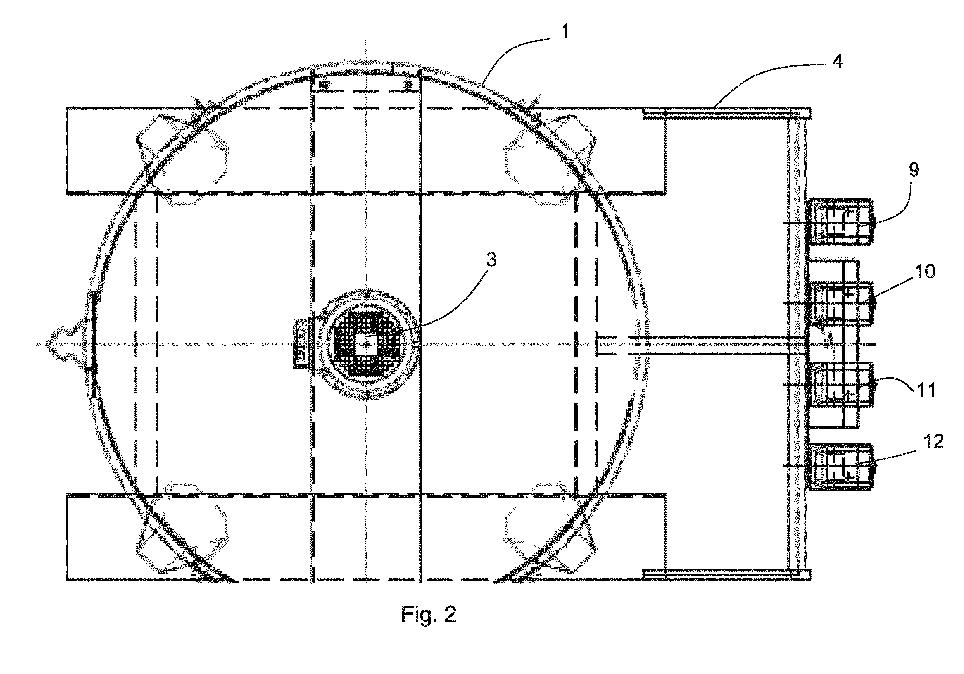

Figure 2 is a schematic view from above of the apparatus shown in figure 1.

The apparatus according to the invention comprises a tank 1 destined to receive a glaze for ceramic products. The tank 1 is mounted on a carriage 4, thanks to which it can be easily moved.

The tank 1 is connected to an external pump by means of which the glaze can be loaded from a storage tank and is equipped with a first pump 8, for example a centrifugal pump operated, by means of a drive shaft 2, by an electric motor 3. The first pump 8 serves, inter alia, to keep the glaze delivered to the tank 1 agitated.

The tank 1 is equipped with a first level sensor 5, capable of detecting a preset maximum level of the glaze in the tank 1, and a second level sensor 6 suitable for detecting a minimum preset level of the glaze in the tank 1. Tank 1 uses the same pump 8 by means of which the glaze contained in the tank 1 can be decanted into the reservoir of a glazing machine.

The tank 1 furthermore has associated with it a plurality of further pumps 9, 10, 11, 12, by means of which water and additives for the glaze can be delivered to the tank 1. Each of the pumps 9-12 is provided with a respective pressure regulating valve.

The tank 1 is equipped with a densimeter 7, to measure the density of the glaze present in the tank 1.

The apparatus according to the invention is finally equipped with a control panel 13 which controls the operation of the first pump 8 and of the further pumps 9-12. The control panel 13 comprises a software, which controls the automatic operation of the device and by means of which the desired value can be set for the density of the glaze, as well as the type and quantity of additives to be added.

The operation of the apparatus according to the invention is described below.

The further pumps 9-12 must be connected, by means of suitable pipework, not depicted, to containers, not depicted, containing the water and the additives to be added to the glaze, while the external pump, not depicted, must be connected to the glaze storage tank and the first pump 8 must be connected to the reservoir of a glazing machine.

The water container can be replaced by a connection from the respective further pump 9 to a water network.

After the glaze has been prepared in the storage tank, the software with which the control panel is equipped is used to set the desired density of the glaze, and the type and quantity of additives to be added to the glaze.

Next, the apparatus according to the invention is started up; by means of the external pump, the apparatus loads the glaze from the storage tank till the preset maximum level, detected by the first level sensor 5, is reached. Pumps 9-12 are then operated to deliver water to the tank 1, to adjust the density of the glaze, and additives. The densimeter 7 continuously checks the density of the glaze and interrupts the addition of water when the required density has been reached. It should be noted that the glaze prepared in the storage tank must have a density greater than that desired, in order to be able to obtain the desired density by adding water after the glaze has been delivered to the tank 1.

Finally, when the density set has been obtained and the selected quantities of additives have been added, the first pump 8 is automatically operated, which transfers the glaze contained in tank 1 to the reservoir of a glazing machine.

When the level of the glaze in tank 1 reaches the preset minimum level, detected by the second level sensor 6, fresh glaze is loaded from the storage reservoir, until the preset maximum level is reached and the adjustment of the density of the glaze and the addition of additives is repeated automatically.

Thanks to the invention it is possible to carry out the final preparation of a glaze for ceramic products and to feed it to a glazing machine, automatically and with high precision, without the intervention of an operator, with a considerable saving in time and expense.

In practical implementation, the characteristics of the invention may be different from those set forth above, but technically equivalent to them, without departing from the scope of the present invention.

## Claims

1. Apparatus for preparing glazes, comprising a tank (1) that is suitable for containing a quantity of glaze, **characterised in that** it comprises a first pump (8) that is suitable for dispensing said glaze from said tank (1), a densimeter (7) suitable for continuously measuring the density of the glaze contained in the tank (1), a plurality of further pumps (9-12) connected to said tank (1) suitable for delivering to the tank (1) additive substances of said glaze that are contained in containers connected to said further pumps (9-12).

2. Apparatus according to claim 1, wherein said further pumps (9-12) comprise a further pump (9) that is suitable for delivering water to said tank (1).

3. Apparatus according to claim 2, wherein said further pump (9) is connected to a water network.

4. Apparatus according to claim 2, or 3, further comprising a control panel (13) operationally connected to said first pump (8), said further pumps (9-12) and said densimeter (7).

5. Apparatus according to claim 4, further comprising a first level sensor (5), that detects a maximum set level of the glaze in said tank (1) and a second level sensor (6) that detects a minimum set level of said glaze in said tank (1), said first level sensor (5) and said second level sensor (6) being operationally connected to said control panel (13).

6. Apparatus according to any preceding claim, **characterised in that** it is mounted on a carriage (4).

7. Apparatus according to any one of claims 4 to 6, wherein in said control panel (13) a management software is stored by means of which the density value of the glaze that it is desired to obtain and the type and quantities of additives to be added can be set, said management software controlling the operation of said first pump (8) and of said further pumps (9-12).
